# EUROPEAN PATENT APPLICATION

(11) **EP 4 641 836 A1**
(43) Date of publication of application: **29.10.2025**
(21) Application number: 24747474.5
(22) Date of filing: 25.01.2024
(51) Int. Cl.: H01Q 5/314, H04B 1/04, H04B 1/18, H04B 1/00, H04B 1/50

(54) **ELECTRONIC DEVICE COMPRISING ANTENNA**

(30) Priority: 26.01.2023 KR 20230009927; 31.01.2023 KR 20230013270
(71) Applicant: Samsung Electronics Co., Ltd., Suwon-si, Gyeonggi-do 16677 (KR)
(72) Inventor: KIM, Kyoungmok, Suwon-si Gyeonggi-do 16677 (KR); AN, Seongyong, Suwon-si Gyeonggi-do 16677 (KR)
(74) Representative: Nederlandsch Octrooibureau
(86) International application number: PCT/KR2024/001238
(87) International publication number: WO 2024/158241

(57) **Abstract**

This electronic device may comprise: a processor; a metal frame including a first conductive part and a second conductive part; a first wireless communication circuit for providing a first signal of a first frequency band to the first conductive part; a second wireless communication circuit for providing a second signal of a second frequency band to the second conductive part; a passive element electrically connected to the path between the second conductive part and the second wireless communication circuit; and a switching circuit connected to the passive element, wherein the first wireless communication circuit can be controlled to transmit the first signal through the first conductive part, and the switching circuit can be controlled such that a first switch connected to the passive element operates in an open state while the first signal is transmitted. The passive element and the switching circuit in the open state can block passage of at least a part of the first signal introduced to the second conductive part.

## Description

### [Technical Field]

The following descriptions relate to an electronic device including an antenna.

### [Background Art]

An electronic device may transmit a signal through an antenna or receive a signal through the antenna. The electronic device may include a conductive portion positioned at a portion of an edge of a metal housing. The conductive portion may operate as an antenna radiator for transmitting and/or receiving the signal.

The above-described information may be provided as a related art for the purpose of helping understanding of the present disclosure. No argument or decision is made as to whether any of the above descriptions may be applied as a prior art related to the present disclosure.

### [Disclosure]

### [Technical Solution]

In embodiments, an electronic device is provided. The electronic device may comprise a processor, a metal frame including a first conductive portion and a second conductive portion, first wireless communication circuitry configured to provide a first signal of a first frequency band to the first conductive portion, second wireless communication circuitry configured to provide a second signal of a second frequency band to the second conductive portion, a passive element electrically connected in a path between the second conductive portion and the second wireless communication circuitry, and a switching circuit connected to the passive element. The processor may be configured to control the first wireless communication circuitry to transmit the first signal through the first conductive portion. The processor may be configured to control the switching circuit to operate in an open state where a first switch connected to the passive element is open while the first signal is transmitted. The passive element and the switching circuit in the open state may be configured to suppress to passage of at least a portion of the first signal introduced into the second conductive portion.

In embodiments, an electronic device is provided. The electronic device may comprise a processor, a metal frame including a first conductive portion and a second conductive portion, first wireless communication circuitry configured to provide a signal to the first conductive portion, second wireless communication circuitry configured to provide a signal to the second conductive portion, a passive element electrically connected in a path between the second conductive portion and the second wireless communication circuitry, a switching circuit connected to the passive element. The first wireless communication circuitry may be configured to transmit a first signal of a first frequency band through the first conductive portion in an open state where a first switch connected to the passive element is open. The first wireless communication circuitry may be configured to transmit a second signal of the first frequency band through the first conductive portion in a short-circuited state where the first switch connected to the passive element is closed. A radiation gain of the first signal may be higher than a radiation gain of the second signal.

### [Description of the Drawings]

FIG. 1 is a block diagram of an electronic device in a network environment according to an embodiment.
FIG. 2 illustrates an example of conductive portions and non-conductive portions of an electronic device.
FIG. 3 illustrates an example of an electronic device including a switching circuit.
FIG. 4 illustrates an example of an electronic device including a switching circuit.
FIG. 5 illustrates an example of an electronic device including a switching circuit.
FIG. 6 illustrates an operating principle of a switching circuit.
FIGS. 7A to 7B illustrate radiation efficiency according to a state of a switching circuit.
FIG. 8 indicates an S-parameter according to a state of a switching circuit.
FIGS. 9A, 9B, 9C, 9D, and 9E illustrate examples of an electronic device including a switching circuit.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a component of an electronic device (e.g., a communication module, or a wireless communication module), a term referring to an RF-related module ( a front end module (FEM), a power amplifier module (PAM), a FEM including duplexer (FEMid), a power amplifier module including duplexer (PAMid), a Low noise amplifier PAM including duplexer (LPAMid), a radio frequency front end (RFFE), or a radio frequency integrated circuit (RFIC)), a term referring to an antenna (e.g., an antenna, a radiator, an antenna radiator, an antenna unit, or an antenna element), a term referring to a circuit (e.g., a PCB, a FPCB, a signal line, or a feeding line, a data line, am electrical connection, wireless communication circuitry, or communication circuitry), and the like, that are used in the following description are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

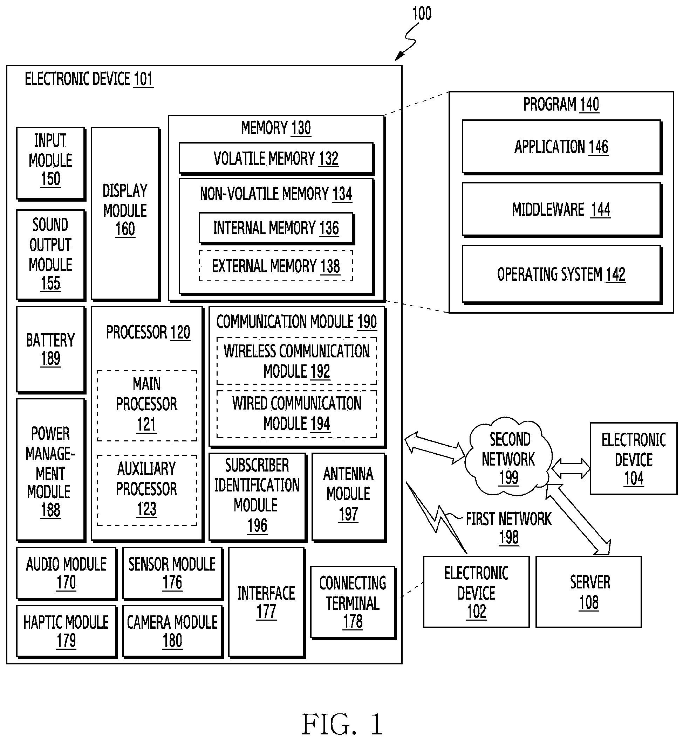

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

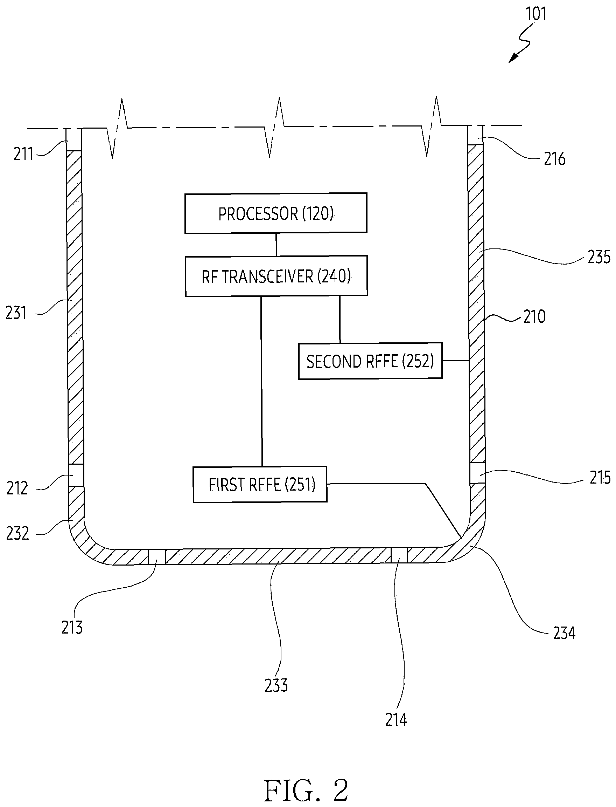

FIG. 2 illustrates an example of conductive portions and non-conductive portions of an electronic device (e.g., an electronic device 101).

Referring to FIG. 2, a metal frame 210 of the electronic device 101 may form an exterior of the electronic device 101. The metal frame 210 of the electronic device 101 may include a plurality of conductive portions. The plurality of conductive portions may be disposed along an edge of the metal frame 210. An end portion of each conductive portion may be spaced apart from an end portion of another conductive portion along the edge of the metal frame 210. For example, the plurality of conductive portions may include a first conductive portion 231, a second conductive portion 232, a third conductive portion 233, a fourth conductive portion 234, and/or a fifth conductive portion 235.

According to an embodiment, each conductive portion of the plurality of conductive portions may be disposed between non-conductive portions. For example, the first conductive portion 231 may be disposed between a first non-conductive portion 211 and a second non-conductive portion 212. For example, the second conductive portion 232 may be disposed between the second non-conductive portion 212 and a third non-conductive portion 213. For example, the third conductive portion 233 may be disposed between the third non-conductive portion 213 and a fourth non-conductive portion 214. For example, the fourth conductive portion 234 may be disposed between the fourth non-conductive portion 214 and a fifth non-conductive portion 215. For example, the fifth conductive portion 235 may be disposed between the fifth non-conductive portion 215 and a sixth non-conductive portion 216.

According to an embodiment, at least a portion of the conductive portions may operate as an antenna radiator. The electronic device 101 may include a processor (e.g., a processor 120). The processor 120 may provide a signal to the at least a portion of the conductive portions through an RF transceiver 240 and an RFFE (e.g., a wireless communication module 192). For example, the processor 120 may provide the fourth conductive portion 234 with a first signal of a first frequency band through the RF transceiver 240 and a first RFFE 251. In addition, for example, the processor 120 may provide the fifth conductive portion 235 with a second signal of a second frequency band through the RF transceiver 240 and a second RFFE 252. A signal fed from the RFFE (e.g., the first RFFE 251 or the second RFFE 252) may be radiated through a conductive portion (e.g., the fourth conductive portion 234 or the fifth conductive portion 235). The signal may be transmitted to an external electronic device (e.g., an electronic device 102 or a server 108).

According to an embodiment, in order to transmit a signal from the RFFE to a conductive portion, circuitry for impedance matching may be configured in the electronic device 101. For example, matching circuitry (not illustrated) for a frequency band of a signal may be electrically connected to a portion of the conductive portions that operates as an antenna radiator. In an embodiment, the matching circuitry may include a switching circuit and at least one passive element such as an inductor or a capacitor. For example, the switching circuit may be electrically connected to a conductive portion (e.g., the fifth conductive portion 235). In an embodiment, the switching circuit may be short-circuited or opened with the at least one passive element (e.g., the inductor or the capacitor). When the switching circuit is opened, parasitic capacitance may occur. In a conventional electronic device, radiation performance of an antenna including another conductive portion (e.g., the fourth conductive portion 234) adjacent to a conductive portion (e.g., the fifth conductive portion 235) electrically connected to the matching circuitry may deteriorate due to the parasitic capacitance and the at least one passive device.

A resonance generated by the parasitic capacitance and the at least one passive element may be referred to as a parasitic resonance. In order to reduce the parasitic resonance, techniques for changing a value of a passive element or reducing an occurrence of parasitic capacitance may be used. However, as a plurality of antennas (e.g., antenna radiators) should be disposed within a limited space to support various wireless communication bands (e.g., LTE, NR, WiFi, and ultra-wideband (UWB)), it may be difficult to reduce interference between adjacent antennas and increase a sufficient radiation gain of the antenna with only the techniques described above.

According to embodiments of the present disclosure, the electronic device 101 may utilize the parasitic resonance due to the passive element and the parasitic capacitance as a notch filter (or a band stop filter) to increase the radiation gain of the antenna including the other conductive portion adjacent to the conductive portion (e.g., the fifth conductive part 235) electrically connected to the matching circuit. When a signal is radiated from the other conductive portion, interference from the conductive portion to the other conductive portion may be reduced through the notch filter, thereby improving antenna radiation efficiency of the other conductive portion.

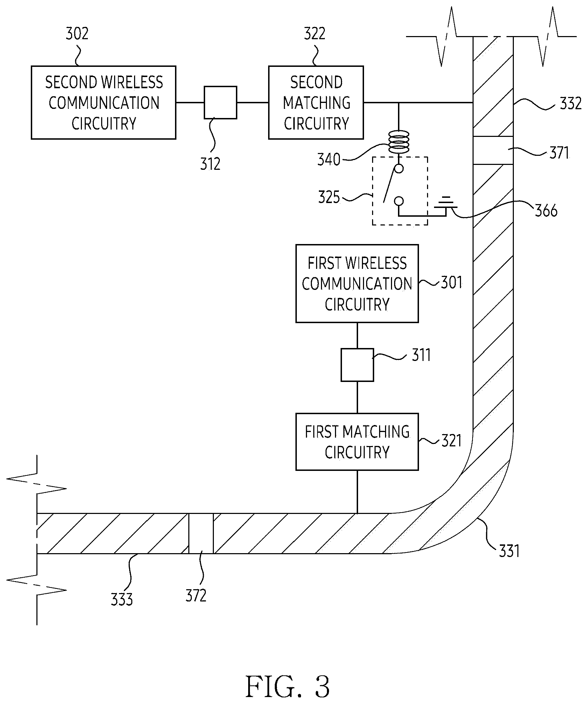

FIG. 3 illustrates an example of an electronic device (e.g., an electronic device 101) including a switching circuit. According to an embodiment, the switching circuit may be used to increase radiation efficiency of a conductive portion of the electronic device 101.

Referring to FIG. 3, the electronic device 101 may include first wireless communication circuitry 301 and second wireless communication circuitry 302. For example, the first wireless communication circuitry 301 may include the first RFFE 251 of FIG. 2. For example, the second wireless communication circuitry 302 may include the second RFFE 252 of FIG. 2. In an embodiment, the first wireless communication circuitry 301 may be configured to feed a first signal of a first frequency band. The first wireless communication circuitry 301 may include communication components including a transmission path and/or a reception path between a first conductive portion 331 and an RF transceiver (e.g., an RF transceiver 240). In an embodiment, the second wireless communication circuitry 302 may be configured to feed a second signal of a second frequency band. The second wireless communication circuitry 301 may include communication components including a transmission path and/or a reception path between a second conductive portion 332 and the RF transceiver (e.g., the RF transceiver 240).

According to an embodiment, the electronic device 101 may include a first feeding portion 311 and a second feeding portion 312. For example, the electronic device 101 may include first matching circuitry 321 and second matching circuitry 322. The electronic device 101 may include the first conductive portion 331, the second conductive portion 332, and/or a third conductive portion 333. For example, the first conductive portion 331 may be disposed between a first non-conductive portion 371 and a second non-conductive portion 372. The first conductive portion 331 may exemplify the fourth conductive portion 234 of FIG. 2. The second conductive portion 332 may exemplify the fifth conductive portion 235 of FIG. 2. Hereinafter, in order to describe a relationship between two radiators, the first conductive portion 331 and the second conductive portion 332 are described as examples, but embodiments of the present disclosure are not limited thereto. An operation and a circuit structure according to embodiments to be described later may be applied to conductive portions (e.g., the second conductive portion 232 and the third conductive portion 233) disposed in other positions in addition to the fourth conductive portion 234 and the fifth conductive portion 234 of FIG. 2.

According to an embodiment, the first wireless communication circuitry 301 may provide the first conductive portion 331 with the first signal through the first feeding portion 311. The first matching circuitry 321 may be disposed between the first feeding portion 311 and the first conductive portion 331. For example, a first antenna may include a first radiator, the first matching circuitry 321, and the first feeding portion 311. For example, the first radiator may include the first conductive portion 331. In order to increase a gain of the first signal, resonance may be formed in a frequency band of the first signal through the first matching circuitry 321. According to an embodiment, the second wireless communication circuitry 302 may provide the second conductive portion 332 with the second signal through the second feeding portion 312. The second matching circuitry 322 may be disposed between the second feeding portion 312 and the second conductive portion 332. For example, a second antenna may include a second radiator, the second matching circuitry 322, and the second feeding portion 312. For example, the second radiator may include the second conductive portion 332. In order to increase a gain of the second signal, resonance may be formed in a frequency band of the second signal through the second matching circuitry 322.

According to an embodiment, the electronic device 101 may include a switching circuit 325 and an inductor 340. For example, the inductor 340 may be electrically connected in a path between the second conductive portion 332 and the second feeding portion 312. The switching circuit 325 may be electrically connected to the inductor 340 and a ground portion 366. At least one of the inductor 340, the switching circuit 325, or the second matching circuitry 322 may be configured to perform impedance matching according to a frequency band of a signal provided to the second conductive portion 332. According to an embodiment, the switching circuit 325 may operate in a short-circuited state, which is a state of connecting a space between the inductor 340 and the ground portion 366, or in an open state, which is not connected to the inductor 340, according to a control of a processor (e.g., the processor 120). For example, according to the frequency band of the signal provided to the second conductive portion 332, the switching circuit 325 may operate in the open state or the short-circuited state.

According to an embodiment, in the switching circuit 325, according to the control of the processor 120, the inductor 340 and the ground portion 366 may be electrically connected or not be connected, according to a state of the switching circuit 325. The state of the switching circuit 325 may repeat the open state and the short-circuited state. For example, the switching circuit 325 may include a switch positioned between the inductor 340 and the ground portion 366. In the short-circuited state, the switch may electrically connect the inductor 340 to the ground portion 366. Thereafter, according to the control of the processor 120, the state of the switching circuit 325 may be changed from the short-circuited state to the open state. In the open state, the inductor 340 may not be electrically connected to the ground portion 366. When the switch of the switching circuit 325 is in the open state, the inductor 340 may not be electrically connected to the ground portion 366, and parasitic capacitance may occur between the inductor 340 and the ground portion 366. For example, the parasitic capacitance of about 2.6 pF may occur. In a state in which the switch connected to the inductor 340 is open, the switching circuit 325 may be connected to the inductor 340 in series, and may have the parasitic capacitance by the switch in the open state. For example, the inductor 340 and the switching circuit 325 may function as a filter (e.g., a band stop filter, band suppress filter) to suppress a passage of a signal of a specific frequency band (e.g., a first frequency band).

According to an embodiment, the first conductive portion 331 and the second conductive portion 332 disposed along an edge of a metal frame 210 of the electronic device 101 may operate as an antenna radiator. The parasitic capacitance and an inductance of the inductor 340 may function as a notch filter. The notch filter may be used to block a signal of the specific frequency band. For example, the notch filter may be configured not to pass a component corresponding to the specific frequency band of the first signal radiated through the first conductive portion 331. The notch filter may include a band stop filter. A signal supplied to the first conductive portion 331 may be introduced into a path for the second conductive portion 332, or a signal supplied to the second conductive portion 332 may be introduced into a path for the first conductive portion 331. However, signals in the specific frequency band may not be transmitted through the path for the second conductive portion 332 through the notch filter.

According to an embodiment, the inductance of the inductor 340 and the parasitic capacitance may be determined by the frequency band of the first signal of the first conductive portion 331. While the first signal of the first conductive portion 331 is transmitted, the switching circuit 325 and the inductor 340 may suppress a passage of at least a portion of the first signal. For example, in a case that the frequency band of the first signal is about 2.6 GHz, the parasitic capacitance may be about 2.66 pF, and the inductance may be about 8.2 nF. For example, in the parasitic capacitance and the inductance, a frequency band in which the passage is blocked may be about 2.6 GHz. In addition, for example, in a case that the frequency band of the first signal is about 3.2 GHz, the parasitic capacitance may be about 2.66 pF, and the inductance may be about 5.6 pF. For example, in the parasitic capacitance and the inductance, the frequency band may be about 3.2 GHz band. As interference from the second conductive portion 332 decreases, radiation performance of an antenna including the first conductive portion 331 may be improved.

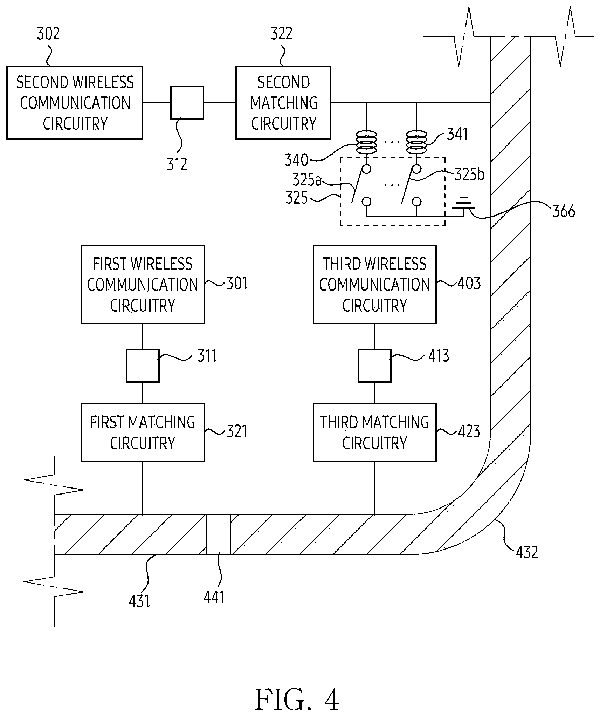

FIG. 4 illustrates an example of an electronic device (e.g., an electronic device 101) including a switching circuit (e.g., a switching circuit 325). The same reference number may be referred to for the same description between drawings. A principle for increasing radiation efficiency of a conductive portion of the electronic device 101 through the switching circuit 325 may be applied to the electronic device 101 of FIG. 4.

Referring to FIG. 4, according to an embodiment, the electronic device 101 may include first wireless communication circuitry 301, second wireless communication circuitry 302, and/or third wireless communication circuitry 403. The electronic device 101 may include a first feeding portion 311, a second feeding portion 312, and/or a third feeding portion 413. The electronic device 101 may include first matching circuitry 321, second matching circuitry 322, and/or third matching circuitry 423. The electronic device 101 may include a first conductive portion 431 and a second conductive portion 432. For example, the first conductive portion 431 may include a conductive portion 333. In addition, for example, the second conductive portion 432 may include a conductive portion disposed instead of a first non-conductive portion 371, a first conductive portion 331, and a second conductive portion 332. A non-conductive portion 441 for segmentation may be disposed between the first conductive portion 431 and the second conductive portion 432. The first wireless communication circuitry 301 may be configured to feed a first signal of a first frequency band to the first conductive portion 431. The second wireless communication circuitry 302 may be configured to feed a second signal of a second frequency band to the second conductive portion 432. The third wireless communication circuitry 403 may be configured to feed a third signal of a third frequency band to the second conductive portion 432. Signals in different frequency bands may be radiated through the same conductive portion (e.g., the second conductive portion 432).

According to an embodiment, a function of a notch filter according to switching may also be applied to a conductive portion (e.g., the first conductive portion 431) disposed at a different position from the first conductive portion 331. The first wireless communication circuitry 301 may provide the first conductive portion 431 with the first signal through the first feeding portion 311. In the first matching circuitry 321, the electronic device 101 may be disposed between the first feeding portion 311 and the first conductive portion 431. For example, a first antenna may include a first radiator, the first matching circuitry 321, and the first feeding portion 311. For example, the first radiator may include the first conductive portion 431. In order to increase a gain of the first signal, resonance may be formed in a frequency and of the first signal through the first matching circuitry 321. The second wireless communication circuitry 302 may provide the second conductive portion 432 with the second signal through the second feeding portion 312. The second matching circuitry 322 may be disposed between the second feeding portion 312 and the second conductive portion 432. For example, a second antenna may include a second radiator, the second matching circuitry 322, and the second feeding portion 312. For example, the second radiator may include the second conductive portion 432. In order to increase a gain of the second signal, resonance may be formed in a frequency band of the second signal through the second matching circuitry 322.

According to an embodiment, the electronic device 101 may include the switching circuit 325. A filter function through parasitic capacitance of the switching circuit 325 in an open state and a passive element (e.g., an inductor 340) may operate according to the same principle even if an additional passive element is disposed in addition to the passive element (e.g., the inductor 340).

According to an embodiment, the switching circuit 325 may include a plurality of switches. For example, the plurality of switches may include a first switch 325a and a second switch 325b. According to an embodiment, the electronic device 101 may include a plurality of inductors. For example, the plurality of inductors may include the inductor 340 and an inductor 341. The first switch 325a may be connected to the inductor 340. The second switch 325b may be connected to the inductor 341. The inductor 340 may be electrically connected in a path between the second conductive portion 432 and the second feeding portion 312. The inductor 341 may be electrically connected in a path between the second conductive portion 432 and the second feeding portion 312. The switching circuit 325 may be electrically connected to the plurality of inductors. According to a control of a processor (e.g., a processor 120), the switching circuit 325 may operate in a short-circuited state where at least a portion of the plurality of inductors (e.g., the inductor 340 and the inductor 341) connected to the plurality of switches is connected to a ground portion (e.g., a ground portion 366), or in the open state where all of the plurality of inductors (e.g., the inductor 340 and the inductor 341) is not electrically connected to the ground portion (e.g., the ground portion 366).

According to an embodiment, the switching circuit 325 may enable the plurality of inductors to electrically connect or not to be connected to the ground portion according to the control of the processor 120. A state of the switching circuit 325 may repeat the open state and the short-circuited state. For example, when the first switch 325a is opened, a first parasitic capacitance may occur between the inductor 340 and the ground portion 366. In addition, for example, when the second switch 325b is opened, a second parasitic capacitance may occur between the inductor 341 and the ground portion 366. The first parasitic capacitance and an inductance of the inductor 340 may function as a notch filter. The second parasitic capacitance and an inductance of the inductor 341 may function as a notch filter. Through the notch filters, signals in a specific frequency band of the first wireless communication circuitry 301 may not be transmitted to the second wireless communication circuitry 302 and the path for the first conductive portion 431.

According to an embodiment, even if a conductive portion to which the switching circuit 325 is connected is the same as a conductive portion that radiates a signal, the filter function through the parasitic capacitance of the switching circuit 325 in the open state and the passive element may be applied according to the same principle. For example, the third wireless communication circuitry 403 may provide the second conductive portion 432 with the third signal of the third frequency band through the third feeding portion 413. The third matching circuitry 423 may be disposed between the third feeding portion 413 and the second conductive portion 432. When a switch (e.g., the first switch 325a or the second switch 325b) connected to an inductor among the plurality of inductors (e.g., the inductor 340 and the inductor 341) is open, the switching circuit 325 may be connected to the inductor in series and may have the parasitic capacitance by the switch in the open state. For example, at least one switch among the plurality of switches connected to the plurality of inductors may be opened. At least one inductor connected to the at least one switch and the parasitic capacitance according to the at least one switch may function as a filter (e.g., a band stop filter) to suppress a passage of a signal of the specific frequency band (e.g., the third frequency band).

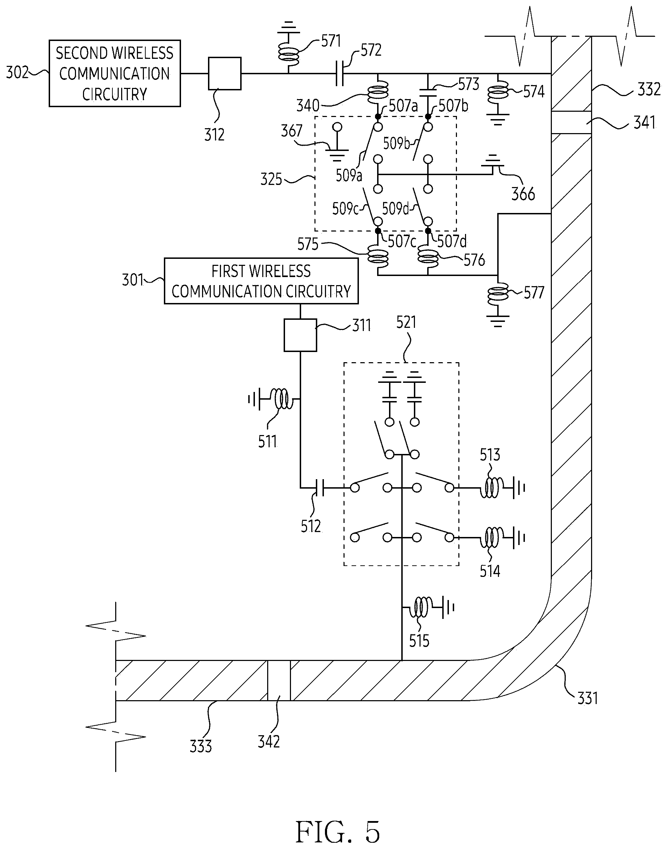

FIG. 5 illustrates an example of an electronic device (e.g., an electronic device 101) including a switching circuit (e.g., a switching circuit 325). The same reference number may be referred to for the same description between drawings. A principle for increasing radiation efficiency of an antenna using a conductive portion of the electronic device 101 through the switching circuit 325 may be applied to the electronic device 101 of FIG. 5.

Referring to FIG. 5, the electronic device 101 according to an embodiment may include first wireless communication circuitry 301 and second wireless communication circuitry 302. The electronic device 101 may include a first feeding portion 311 and a second feeding portion 312.

According to an embodiment, the electronic device 101 may include an inductor 511, a capacitor 512, an inductor 513, an inductor 514, an inductor 515, and/or a switching circuit 521. For example, the switching circuit 521 may include a plurality of switches and capacitors. The inductor 511, the capacitor 512, the inductor 513, the inductor 514, the inductor 515, and the switching circuit 521 may operate as matching circuitry for a first conductive portion 331. For example, the inductor 511, the capacitor 512, the inductor 513, the inductor 514, the inductor 515, and the switching circuit 521 may be understood as an exemplary structure of the first matching circuitry 321 of FIG. 3 or 4.

According to an embodiment, the electronic device 101 may include an inductor 571, a capacitor 572, a capacitor 573, an inductor 574, an inductor 575, an inductor 576, an inductor 577, an inductor 340, and/or the switching circuit 325. In an embodiment, the switching circuit 325 may include a plurality of switches. For example, the switching circuit 325 may include four switches. The four switches may include a first switch 509a connected to the inductor 340, a second switch 509b connected to the capacitor 573, a third switch 509c connected to the inductor 575, and/or a fourth switch 509d connected to the inductor 576. For example, the switching circuit 325 may include four ports. The four ports may include a first port 507a connected to the first switch 509a, a second port 507b connected to the second switch 509b, a third port 507c connected to the third switch 509c, or a fourth port 507d connected to the fourth switch 509d. For example, the first switch 509a may electrically connect the inductor 340 to a ground portion 366, to a ground portion 367 different from the ground portion 366, or operate in an open state. For example, the second switch 509b may electrically connect the capacitor 573 to the ground portion 366, or may operate in the open state. For example, the third switch 509c may electrically connect the inductor 575 to the ground portion 366, or may operate in the open state. For example, the fourth switch 509d may electrically connect the inductor 576 to the ground portion 366, or may operate in the open state. The inductor 571, the capacitor 572, the capacitor 573, the inductor 574, the inductor 575, the inductor 576, the inductor 577, the inductor 340, and/or the switching circuit 325 may operate as matching circuitry for a second conductive portion 332. For example, the inductor 571, the capacitor 572, and/or the inductor 574 may be understood as an exemplary structure of the second matching circuitry 322 of FIG. 3.

According to an embodiment, the switching circuit 325 may include the first switch 509a for the inductor 340, the second switch 509b for the capacitor 573, the third switch 509c for the inductor 575, and/or the fourth switch 509d for the inductor 576. When the inductor 340 connected to the first switch 509a is electrically connected to a ground portion (e.g., the ground portion 366 or the ground portion 367), the inductor 340 may operate as a portion of the matching circuitry for the second conductive portion 332. For example, the inductor 340 may have an inductance of about 8.2 nH. The first switch 509a may be connected to the ground portion 366 or the ground portion 367. For example, the ground portion 366 may be positioned outside the switching circuit 325, and the ground portion 367 may be positioned inside the switching circuit 325. For example, the ground portion 366 may be electrically connected to the ground portion 367. For example, the ground portion 366 may be the same ground as the ground portion 367.

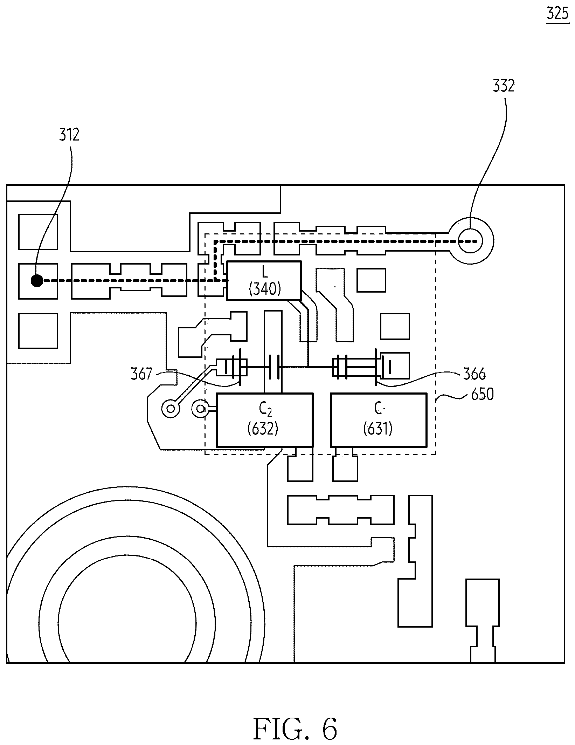

According to an embodiment, the switching circuit 325 connected to the inductor 340 may not be connected to the ground portion (e.g., the ground portion 366 or the ground portion 367). The first switch 509a may be opened. In order to describe a notch filter function according to an open state of the first switch 509a, FIG. 6 may be referred to. FIG. 6 illustrates an operation principle of a switching circuit 325. In an open state, a first parasitic capacitance C1 631 may occur between an inductor 340 and the ground portion 366. In addition, in the open state, a second parasitic capacitance C2 632 may occur between the inductor 340 and a ground portion 367. For example, the switching circuit 325 may be understood as having a circuit structure in which a capacitor having the first parasitic capacitance C1 631 and a capacitor having the second parasitic capacitance C2 632 may be electrically connected to the inductor 340. The switching circuit 325 may operate as a notch filter that filters a signal of a specific frequency band (e.g., a 2.6 GHz band). The first parasitic capacitance C1 631 and the second parasitic capacitance C2 632 may be understood as one integrated parasitic capacitance C=C1+C2. The switching circuit 325 is connected to the inductor 340 in series and may function substantially the same as a capacitor having the integrated parasitic capacitance. The inductor 340 and the switching circuit 325 disposed in parallel in a path for a second conductive portion 332 may function as a filter (e.g., a band stop filter) to suppress a passage of the signal of the specific frequency band.

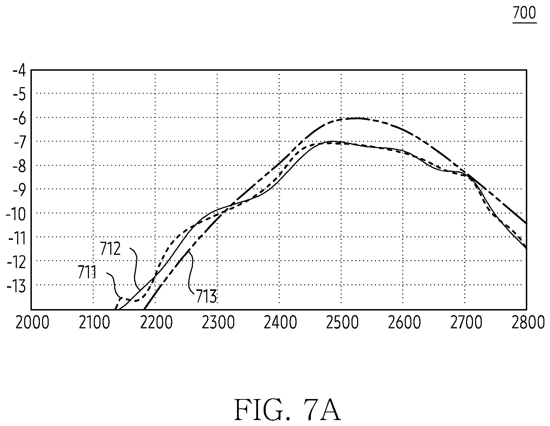

As the signal of the specific frequency band is blocked, null may occur in radiation efficiency of the second conductive portion 332 in the specific frequency band. On the other hand, radiation efficiency of an antenna including a first conductive portion 331 may be improved based on the inductor 340 and the switching circuit 325. The signal of the specific frequency band may include a resonance frequency band of the antenna including the first conductive portion 331. Specific performances are described through FIGS. 7A to 8.

FIGS. 7A to 7B illustrate radiation efficiency according to a state of a switching circuit (e.g., a switching circuit 325).

Referring to FIG. 7A, a graph 700 indicates radiation efficiency of an antenna including a conductive portion (e.g., a first conductive portion 331). A horizontal axis of the graph 700 indicates a frequency (unit: megahertz (MHz)), and a vertical axis of the graph 700 indicates radiation efficiency. A first line 711 indicates radiation efficiency of an antenna including the first conductive portion 331 when there is no inductor 340 of the electronic device 101 of FIG. 5. When the inductor 340 of the electronic device 101 of FIG. 5 is electrically connected to a ground portion (e.g., a ground portion 366 or a ground portion 367) through the switching circuit 325, in other words, in a short-circuited state, a second line 712 indicates the radiation efficiency of the antenna including the first conductive portion 331. When the inductor 340 of the electronic device 101 of FIG. 5 is not connected to the ground portion through the switching circuit 325, in other words, in an open state, a third line 713 indicates the radiation efficiency of the antenna including the first conductive portion 331.

In a specific frequency band (e.g., a frequency band within about 2500 to 2600 MHz), the third line 713 may provide higher radiation efficiency than that of the first line 711 or the second line 712. While a first signal is transmitted in the specific frequency band through the first conductive portion 331, the switching circuit 325 and the inductor 340 in the open state may function as a notch filter. The switching circuit 325 and the inductor 340 in the open state may be configured to suppress a passage of the signal of the specific frequency band with respect to another conductive portion (e.g., a second conductive portion 332). Based on the notch filter, as an interference component by the second conductive portion 332 decreases, a radiation gain of the antenna including the first conductive portion 331 may increase. As a radiation gain increases, radiation efficiency may increase. According to an embodiment, in the open state where a switch of the switching circuit 325 is opened, a radiation gain (hereinafter, referred to as a first radiation gain) of the antenna including the first conductive portion 331 may be measured. In the short-circuited state where the switch of the switching circuit 325 electrically connects the inductor 340 to the ground portion, a radiation gain (hereinafter, referred to as a second radiation gain) of the first conductive portion 331 may be measured. Due to a filter characteristic using the inductor 340 and the switching circuit 325 in the open state, the radiation gain of the antenna including the first conductive portion 331 may increase. By comparing the first radiation gain with the second radiation gain, it may be identified that the switching circuit 325 and the inductor 340 having the filter characteristic according to an embodiment of the present disclosure are included in the electronic device 101.

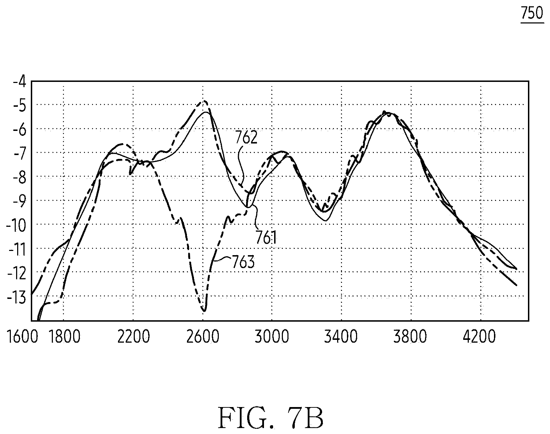

Referring to FIG. 7B, a graph 750 indicates radiation efficiency of an antenna including a second conductive portion (e.g., the second conductive portion 332). A horizontal axis of the graph 750 indicates a frequency (unit: MHz), and a vertical axis of the graph 750 indicates radiation efficiency. A first line 761 indicates the radiation efficiency of the antenna including the second conductive portion 332 when there is no inductor 340 of the electronic device 101 of FIG. 5. When the inductor 340 of the electronic device 101 of FIG. 5 is electrically connected to the ground portion through the switching circuit 325, in other words, in the short-circuited state, a second line 762 indicates the radiation efficiency of the antenna including the second conductive portion 332. When the inductor 340 of the electronic device 101 of FIG. 5 is not connected to the ground portion by the switching circuit 325, in other words, in the open state, a third line 763 indicates the radiation efficiency of the antenna including the second conductive portion 332.

In the specific frequency band (e.g., the frequency band within about 2500 to 2600 MHz), the third line 763 may provide a lower radiation efficiency than that of the first line 761 or the second line 762. While the first signal is transmitted in the specific frequency band through the first conductive portion 331, the switching circuit 325 and the inductor 340 in the open state may be configured to suppress a passage of a signal of the specific frequency band with respect to the second conductive portion 332. Since the first signal of the specific frequency band does not pass through the second conductive portion 332 based on the switching circuit 325 and the inductor 340, the radiation efficiency of the antenna including the second conductive portion 332 in the specific frequency band may decrease sharply.

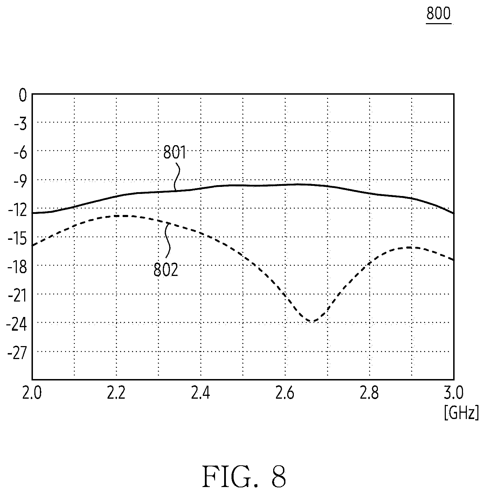

FIG. 8 indicates an S-parameter according to a state of a switching circuit. The S-parameter indicates a passing coefficient S21 from a second antenna (e.g., an antenna including a second conductive portion 332) to a first antenna (e.g., an antenna including a first conductive portion 331). As the pass coefficient is larger, it means that a signal of the second antenna is well introduced into the first antenna, and as the pass coefficient is smaller, it means that isolation performance between the second antenna and the first antenna is higher.

Referring to FIG. 8, a horizontal axis of a graph 800 indicates a frequency (unit: gigahertz (GHz)), and a vertical axis of the graph 800 indicates a pass coefficient. An inductance of the inductor 340 connected to the second conductive portion 332 and parasitic capacitance of the switching circuit 325 in the open state may operate as a notch filter for blocking a signal of a predetermined frequency band from a signal of the first conductive portion 331. A first line 801 indicates a pass coefficient of a state before the notch filter functions based on the switching circuit 325 in a short-circuited state. A second line 802 indicates a passing coefficient in a state where the notch filter functions based on the switching circuit 325 in an open state. Referring to the first line 801 and the second line 802, it may be identified that as a filter characteristic operates, an inter-antenna isolation characteristic increases in the specific frequency band. As the isolation characteristic increases, radiation efficiency of the antenna including the first conductive portion 331 may increase as illustrated in the graph 700 of FIG. 7A.

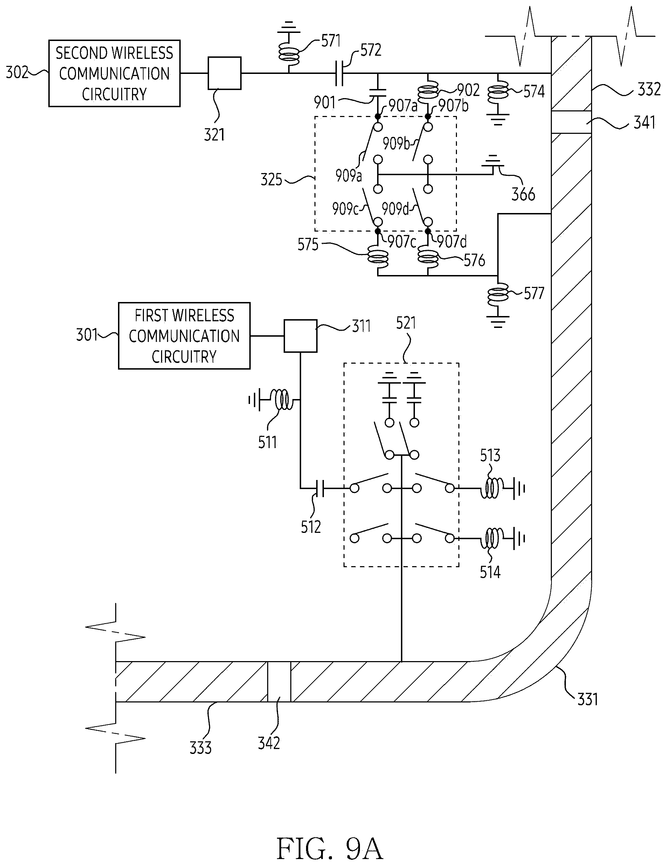

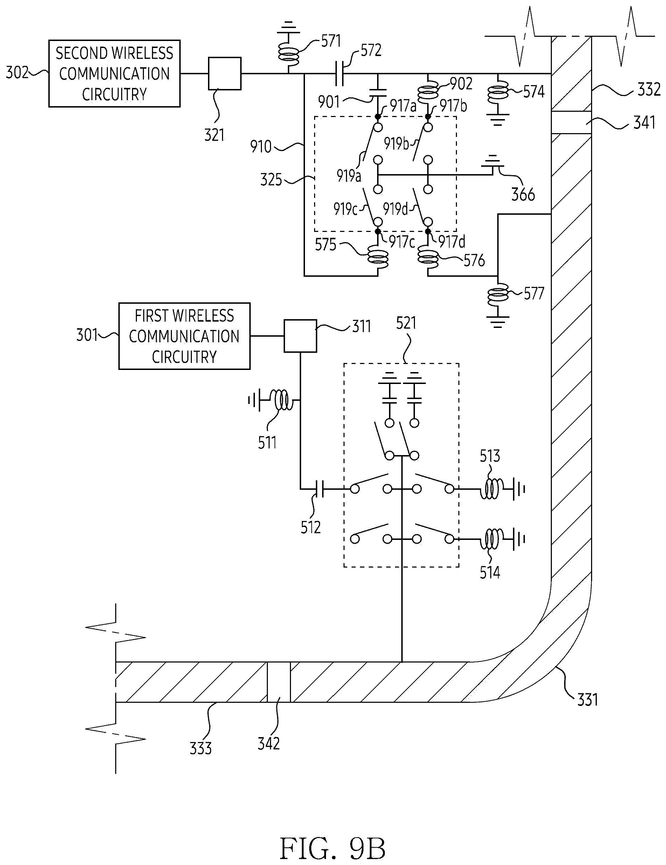

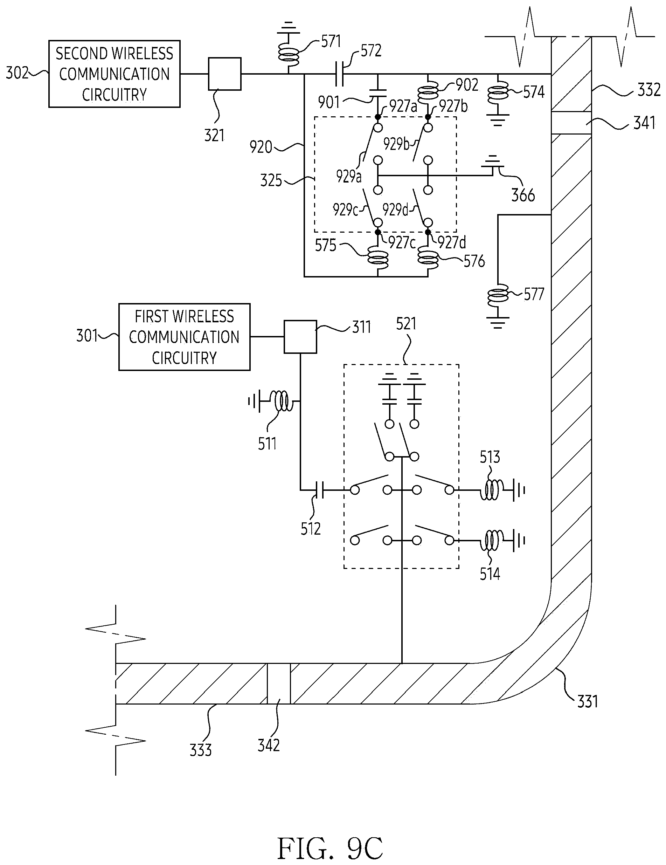

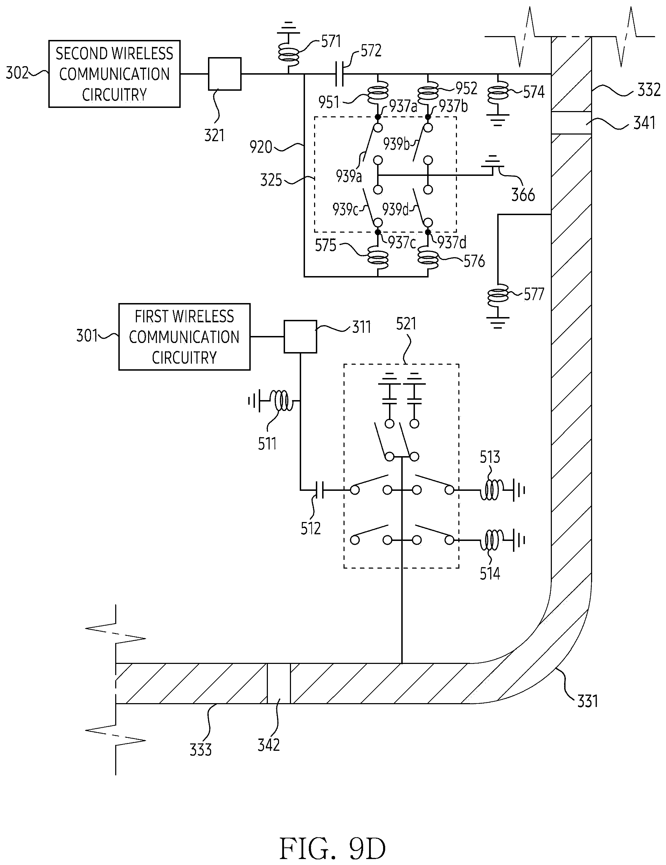

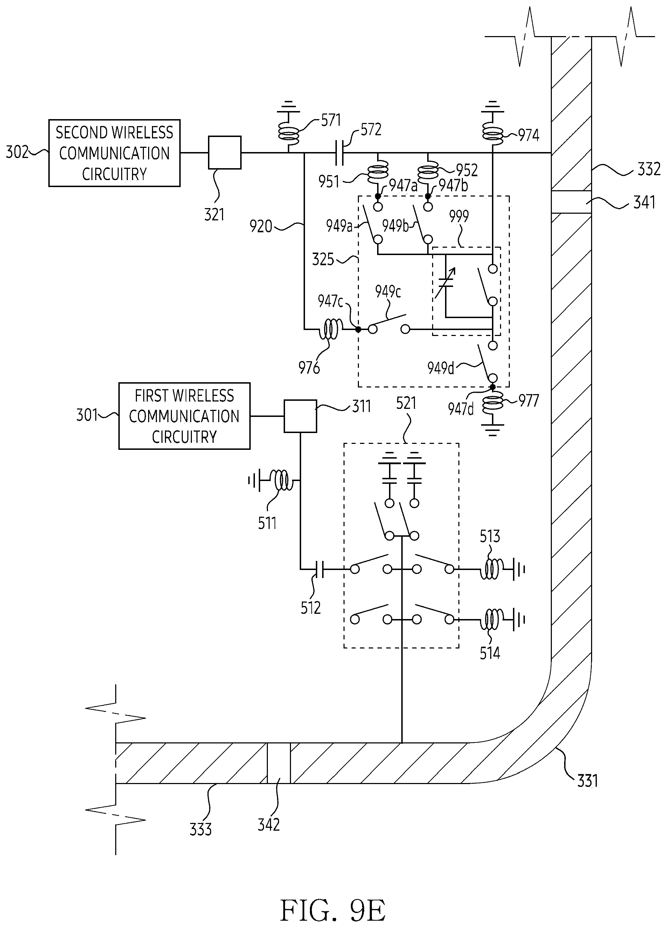

FIGS. 9A, 9B, 9C, 9D, and 9E illustrate examples of an electronic device including a switching circuit. The same reference number may be referred to for the same description between drawings.

Referring to FIG. 9A, an electronic device 101 may include first wireless communication circuitry 301 and second wireless communication circuitry 302. The electronic device 101 may include a first feeding portion 311 and a second feeding portion 312.

According to an embodiment, the electronic device 101 may include an inductor 511, a capacitor 512, an inductor 513, an inductor 514, an inductor 515, and/or a switching circuit 521. In an embodiment, the switching circuit 521 may include a plurality of switches and capacitors. The inductor 511, the capacitor 512, the inductor 513, the inductor 514, the inductor 515, and/or the switching circuit 521 may operate as matching circuitry for a first conductive portion 331. For example, the inductor 511, the capacitor 512, the inductor 513, the inductor 514, the inductor 515, and/or the switching circuit 521 may be understood as an exemplary structure of the first matching circuitry 321 of FIG. 3 or 4.

According to an embodiment, the electronic device 101 may include an inductor 571, a capacitor 572, a capacitor 901, an inductor 902, an inductor 574, an inductor 575, an inductor 576, an inductor 577, and/or a switching circuit 325. In FIGS. 3 to 5, examples in which a notch filter function is enabled according to an operation state of a switch of a first port (e.g., a first port 507a) of the switching circuit 325, for example, a first switch (e.g., a first switch 509a) connected to the inductor 340, have been described, but embodiments of the present disclosure are not limited thereto. Parasitic capacitance and an inductor occurring in a second switch (e.g., a second switch 509b) connected to another port (e.g., a second port 507b) of the switching circuit 325 may be configured to block a signal of a specific frequency band.

According to an embodiment, the switching circuit 325 may include a plurality of switches. For example, the switching circuit 325 may include a single pole 4-throw (SP4T) switch. The plurality of switches may include a first switch 909a connected to the capacitor 901, a second switch 909b connected to the inductor 902, a third switch 909c connected to the inductor 575, and a fourth switch 909d connected to the inductor 576. For example, the switching circuit 325 may include a plurality of ports (e.g., four) connected to a passive element. For example, the four ports of the switching circuit 325 may include a first port 907a connected to the first switch 909a, a second port 907b connected to the second switch 909b, a third port 907c connected to the third switch 909c, and/or a fourth port 907d connected to the fourth switch 909d. For example, the switching circuit 325 may include a ground port connected to a ground portion 366. For example, the first switch 909a may electrically connect the capacitor 901 to the ground portion 366 or operate in an open state. For example, the second switch 909b may electrically connect the inductor 902 to the ground portion 366, or may operate in the open state. For example, the third switch 909c may electrically connect the inductor 575 to the ground portion 366, or may operate in the open state. For example, the fourth switch 909d may electrically connect the inductor 576 to the ground portion 366, or may operate in the open state.

According to an embodiment, when the inductor 902 connected to the second switch 909b is electrically connected to the ground portion 366, the inductor 902 may operate as a portion of matching circuitry for a second conductive portion 332. For example, the inductor 902 may have an inductance of about 8.2 nH. The second switch 909b may short-circuit or open the ground portion 366 and the inductor 902. The inductor 902 may not be electrically connected to the ground portion 366 through the switching circuit 325. For example, the second switch 909b may be opened. In the open state of the second switch 909b, parasitic capacitance may occur between the inductor 902 and the ground portion 366. In the open state of the second switch 909b, the switching circuit 325 may be connected to the inductor 902 in series and may operate as a capacitor having the parasitic capacitance. The inductor 902 and the switching circuit 325 disposed in parallel in a path for the second conductive portion 332 may function as a filter (e.g., a band stop filter) to suppress a passage of the signal of the specific frequency band.

Referring to FIG. 9B, the electronic device 101 may include the first wireless communication circuitry 301 and the second wireless communication circuitry 302. The electronic device 101 may include the first feeding portion 311 and the second feeding portion 312.

According to an embodiment, the electronic device 101 may include the inductor 511, the capacitor 512, the inductor 513, the inductor 514, the inductor 515, and/or the switching circuit 521. In an embodiment, the switching circuit 521 may include a plurality of switches and capacitors. The inductor 511, the capacitor 512, the inductor 513, the inductor 514, the inductor 515, and/or the switching circuit 521 may operate as matching circuitry for the first conductive portion 331. For example, the inductor 511, the capacitor 512, the inductor 513, the inductor 514, the inductor 515, and/or the switching circuit 521 may be understood as an exemplary structure of the first matching circuitry 321 of FIG. 3 or 4.

According to an embodiment, the electronic device 101 may include the inductor 571, the capacitor 572, the capacitor 901, the inductor 902, the inductor 574, the inductor 575, the inductor 576, the inductor 577, and/or the switching circuit 325. In FIG. 9A, examples in which a notch filter function is enabled according to an operation state of a switch for a second port (e.g., the second port 907b) of the switching circuit 325, for example, the second switch 909b connected to the inductor 902, have been described, but embodiments of the present disclosure are not limited thereto. The notch filter function may be enabled in parallel through the plurality of switches as well as a single switch. For example, an inductor (e.g., the inductor 575 connected to another port (e.g., a third port (e.g., a third port 907c)) of the switching circuit 325 may be configured to block a signal of a specific frequency band based on parasitic capacitance occurring as the third switch 909c operates in the open state.

According to an embodiment, the switching circuit 325 may include a plurality of switches. For example, the switching circuit 325 may include a single pole 4-throw (SP4T) switch. The plurality of switches may include a first switch 919a connected to the capacitor 901, a second switch 919b connected to the inductor 902, a third switch 919c connected to the inductor 575, and/or a fourth switch 919d connected to the inductor 576. For example, the switching circuit 325 may include a plurality of ports (e.g., four) connected to a passive element. The four ports of the switching circuit 325 may include a first port 917a connected to the first switch 919a, a second port 917b connected to the second switch 919b, a third port 917c connected to the third switch 919c, and/or a fourth port 917d connected to the fourth switch 919d. For example, the switching circuit 325 may include a ground port connected to the ground portion 366. For example, the first switch 919a may connect the capacitor 901 to the ground portion 366, or may operate in the open state. The second switch 919b may connect the inductor 902 to the ground portion 366, or may operate in the open state. The third switch 919c may connect the inductor 575 to the ground portion 366, or may operate in the open state. The fourth switch 919d may connect the inductor 576 to the ground portion 366, or may operate in the open state.

According to an embodiment, the inductor 902 may not be electrically connected to the ground portion 366 through the switching circuit 325. For example, the second switch 919b may be opened. In the open state of the second switch 919b, parasitic capacitance may occur between the inductor 902 and the ground portion 366. In the open state of the second switch 919b, the switching circuit 325 may be connected to the inductor 902 in series and may operate as a capacitor having the parasitic capacitance. The inductor 902 and the switching circuit 325 disposed in parallel in a path for the second conductive portion 332 may function as a filter (e.g., a band stop filter) to suppress a passage of a signal of a specific frequency band.

The inductor 575 may be connected in parallel in a path between the second wireless communication circuitry 302 and the second conductive portion 332. An end portion of the inductor 575 may be electrically connected to the third switch 919c, and another end portion of the inductor 575 may be electrically connected in the path along a line 910. Like the inductor 902, the inductor 575 may not be electrically connected to the ground portion 366 through the switching circuit 325. The third switch 919c may be opened. In the open state of the third switch 919c, parasitic capacitance may occur between the inductor 575 and the ground portion 366. In the open state of the third switch 919c, the switching circuit 325 may be connected to the inductor 575 in series and may operate as a capacitor having the parasitic capacitance. The inductor 575 and the switching circuit 325 connected in parallel in a path connected to the second conductive portion 332 may function as a filter (e.g., a band stop filter) to suppress the passage of the signal of the specific frequency band. The filter may operate in parallel with the filter according to an inductance of the inductor 902 and the parasitic capacitance of the second switch 919b.

According to an embodiment, the switching circuit 325 may be connected to two inductors (e.g., the second switch 919b or the third switch 919c) through two switches (e.g., the inductor 902 or the inductor 575). As at least one switch of the switching circuit 325 is opened, at least one notch filter function according to the at least one switch may be enabled. The at least one of the two switches of the switching circuit 325 being opened may be understood that at least one of the two notch filters is enabled. For example, two or more notch filters may correspond to one band stop filter. According to an embodiment, the electronic device 101 may provide up to three different notch filter characteristics by controlling a state (e.g., an open state or a short-circuited state) of each of the two switches.

According to an embodiment, a characteristic of the filter may be changed according to an inductance value of each inductor of the two inductors (e.g., the inductor 902 or the inductor 575). For example, parasitic capacitance occurring in the switch may be about 2.66 pF. In a case that an inductance value of an inductor connected to the switch is about 8.2 nH, the inductor may operate as a notch filter for blocking a signal of a frequency band of about 2.6 GHz based on the open state of the switch. Also, for example, the parasitic capacitance occurring in the switch may be about 2.66 pF. In a case that an inductance value of the inductor connected to the switch is about 5.6 nH, the inductor may operate as a notch filter for blocking a signal of a frequency band of about 3.2 GHz based on the open state of the switch.

According to an embodiment, the electronic device 101 may identify a frequency band for blocking and identify a switch combination corresponding to the frequency band. The switch combination may include one or a combination of two or more of the two switches (e.g., the second switch 919b or the third switch 919c). For example, the electronic device 101 may control the switching circuit 325 to open one or more switches corresponding to the switch combination. The electronic device 101 may provide a filter characteristic for blocking a signal of the frequency band based on the one or more switches being opened. An inductance of an inductor corresponding to each switch of the one or more switches and parasitic capacitance in a corresponding switch may be determined based on the frequency band.

Referring to FIG. 9C, the electronic device 101 may include the first wireless communication circuitry 301 and the second wireless communication circuitry 302. The electronic device 101 may include the first feeding portion 311 and the second feeding portion 312.

According to an embodiment, the electronic device 101 may include the inductor 511, the capacitor 512, the inductor 513, the inductor 514, the inductor 515, and/or the switching circuit 521. In an embodiment, the switching circuit 521 may include a plurality of switches and capacitors. The inductor 511, the capacitor 512, the inductor 513, the inductor 514, the inductor 515, and/or the switching circuit 521 may operate as matching circuitry for the first conductive portion 331. For example, the inductor 511, the capacitor 512, the inductor 513, the inductor 514, the inductor 515, and/or the switching circuit 521 may be understood as an exemplary structure of the first matching circuitry 321 of FIG. 3 or 4.

According to an embodiment, the electronic device 101 may include the inductor 571, the capacitor 572, the capacitor 901, the inductor 902, the inductor 574, the inductor 575, the inductor 576, the inductor 577, and/or the switching circuit 325. In FIG. 9A, examples in which a notch filter function is enabled according to an operation state of a switch for a second port (e.g., the second port 907b) of the switching circuit 325, for example, the second switch 909b connected to the inductor 902, have been described, but embodiments of the present disclosure are not limited thereto. The notch filter function may be enabled in parallel through the plurality of switches as well as a single switch. For example, the inductor 575 connected to a third port 927c (e.g., the third port 907c) of the switching circuit 325 may be configured to block a signal of a specific frequency band based on parasitic capacitance occurring as a third switch 929c operates in the open state. Additionally, for example, the inductor 576 connected to a fourth port 927d (e.g., the fourth port 907d) of the switching circuit 325 may be configured to block the signal of the specific frequency band based on parasitic capacitance occurring as the fourth switch 979d operates in the open state.

The switching circuit 325 may include a plurality of switches. For example, the switching circuit 325 may include a single-pole four-throw (SP4T) switch. The plurality of switches may include a first switch 929a connected to the capacitor 901, a second switch 929b connected to the inductor 902, a third switch 929c connected to the inductor 575, and/or a fourth switch 929d connected to the inductor 576. For example, the switching circuit 325 may include a plurality of ports (e.g., four) connected to a passive element. The four ports of the switching circuit 325 may include a first port 927a connected to the first switch 929a, a second port 927b connected to the second switch 929b, a third port 927c connected to the third switch 929c, and/or a fourth port 927d connected to the fourth switch 929d. For example, the switching circuit 325 may include a ground port connected to the ground portion 366. The first switch 929a may electrically connect the capacitor 901 to the ground portion 366, or may operate in the open state. The second switch 929b may electrically connect the inductor 902 to the ground portion 366, or may operate in the open state. The third switch 929c may electrically connect the inductor 575 to the ground portion 366, or may operate in the open state. The fourth switch 929d may electrically connect the inductor 576 to the ground portion 366, or may operate in the open state.

As described in FIG. 9B, the inductor 902 may not be electrically connected to the ground portion 366 through the switching circuit 325. The inductor 902 connected in parallel in a path between the second wireless communication circuitry 302 and the second conductive part 332 may operate as a filter (e.g., a band stop filter) to suppress a passage of a signal of a specific frequency band based on capacitance according to the open state of the second switch 929b of the switching circuit 325.

According to an embodiment, in order to operate both the inductor 575 and the inductor 576 as a filter, the inductor 575 and the inductor 576 may be connected in parallel in a path between the second wireless communication circuitry 302 and the second conductive portion 332. For example, an end portion of the inductor 575 may be connected to the third switch 929c, and another end portion of the inductor 575 may be electrically connected in the path along a line 920. In addition, for example, an end portion of the inductor 576 may be connected to the fourth switch 929d, and another end portion of the inductor 576 may be electrically connected in the path along the line 920.

According to an embodiment, the third switch 929c connected to the inductor 575 may be opened. In the open state of the third switch 929c, parasitic capacitance may occur between the inductor 575 and the ground portion 366. In the open state of the third switch 929c, the switching circuit 325 may be connected to the inductor 575 in series and may operate as a capacitor having the parasitic capacitance. The inductor 575 and the switching circuit 325 connected in parallel in the path between the second wireless communication circuitry 302 and the second conductive portion 332 may function as a filter (e.g., a band stop filter) to suppress the passage of the signal of the specific frequency band. The filter may operate in parallel with the filter according to an inductance of the inductor 902 and the parasitic capacitance of the second switch 929b.

According to an embodiment, the fourth switch 929d connected to the inductor 576 may be opened. In the open state of the fourth switch 929d, parasitic capacitance may occur between the inductor 576 and the ground portion 366. In the open state of the fourth switch 929d, the switching circuit 325 may be connected to the inductor 576 in series and may operate as a capacitor having the parasitic capacitance. The inductor 576 connected in parallel in the path between the second wireless communication circuitry 302 and the second conductive portion 332 and the capacitor may function as a filter (e.g., a band stop filter) to suppress the passage of the signal of the specific frequency band. The filter may operate in parallel with a filter according to the open state of the inductor 902 and the second switch 929b and a filter according to the open state of the inductor 575 and the third switch 929c.

According to an embodiment, the switching circuit 325 may be connected to three inductors (e.g., the inductor 902, the inductor 575, or the inductor 576) through three switches (e.g., the second switch 929b, the third switch 929c, or the fourth switch 929d). In an embodiment, as at least one switch of the switching circuit 325 is opened, at least one notch filter function according to the at least one switch may be enabled. For example, the at least one of the three switches of the switching circuit 325 being opened may be understood that at least one of the three notch filters is enabled. For example, three or more notch filters may correspond to one band stop filter. According to an embodiment, the electronic device 101 may provide up to seven different notch filter characteristics by controlling a state (e.g., an open state or a short-circuited state) of each of the three switches.

According to an embodiment, a characteristic of the filter may be changed according to an inductance value of the three inductors (e.g., the inductor 902, the inductor 575, or the inductor 576). For example, parasitic capacitance occurring in the switch may be about 2.66 pF. In a case that an inductance value of an inductor connected to the switch is about 8.2 nH, the inductor may operate as a notch filter for blocking a signal of a frequency band of about 2.6 GHz based on the open state of the switch. Also, for example, the parasitic capacitance occurring in the switch may be about 2.66 pF. In a case that an inductance value of the inductor connected to the switch is about 5.6 nH, the inductor may operate as a notch filter for blocking a signal of a frequency band of about 3.2 GHz based on the open state of the switch. According to an embodiment, the electronic device 101 may identify a frequency band for blocking and identify a switch combination corresponding to the frequency band. For example, the switch combination may include one or more of the three switches (e.g., the second switch 929b, the third switch 929c, or the fourth switch 929d). The electronic device 101 may control the switching circuit 325 to open one or more switches corresponding to the switch combination. The electronic device 101 may provide a filter characteristic for blocking a signal of the frequency band based on the one or more switches being opened. An inductance of an inductor corresponding to each switch of the one or more switches and parasitic capacitance in a corresponding switch may be determined based on the frequency band.

Referring to FIG. 9D, the electronic device 101 may include the first wireless communication circuitry 301 and the second wireless communication circuitry 302. The electronic device 101 may include the first feeding portion 311 and the second feeding portion 312.

According to an embodiment, the electronic device 101 may include the inductor 511, the capacitor 512, the inductor 513, the inductor 514, the inductor 515, and/or the switching circuit 521. In an embodiment, the switching circuit 521 may include a plurality of switches and capacitors. The inductor 511, the capacitor 512, the inductor 513, the inductor 514, the inductor 515, and/or the switching circuit 521 may operate as matching circuitry for the first conductive portion 331. For example, the inductor 511, the capacitor 512, the inductor 513, the inductor 514, the inductor 515, and/or the switching circuit 521 may be understood as an exemplary structure of the first matching circuitry 321 of FIG. 3 or 4.

According to an embodiment, the electronic device 101 may include the inductor 571, the capacitor 572, the inductor 951, the inductor 902, the inductor 574, the inductor 575, the inductor 576, the inductor 577, and/or the switching circuit 325. In FIGS. 9A, 9B, and 9C, the capacitor 901 is illustrated as a passive element connected to a first port (e.g., the first port 907a, the first port 917a, and the first port 927a) of the switching circuit 325, but embodiments of the present disclosure are not limited thereto. Instead of the capacitor 901, the inductor 951 may be disposed. The inductor 575 and the inductor 576 in the switching circuit 350 may be connected in parallel to the path between the second wireless communication circuitry 302 and the second conductive portion 332 along the line 920. For example, the inductor 951 and the inductor 902 may also be disposed in parallel in the path. Like other inductors (e.g., the inductor 902, the inductor 575, or the inductor 576), the inductor 951 may be configured to block a signal of a specific frequency band based on parasitic capacitance occurring as a first switch 937a operates in the open state.

According to an embodiment, the switching circuit 325 may include a plurality of switches. For example, the switching circuit 325 may include a single-pole four-throw (SP4T) switch. For example, the plurality of switches may include a first switch 939a connected to the inductor 951, a second switch 939b connected to the inductor 902, a third switch 939c connected to the inductor 575, and a fourth switch 939d connected to the inductor 576. For example, the switching circuit 325 may include a plurality of ports (e.g., four) connected to a passive element. The four ports of the switching circuit 325 may include a first port 937a connected to the first switch 939a, a second port 937b connected to the second switch 939b, a third port 937c connected to the third switch 939c, and/or a fourth port 937d connected to the fourth switch 939d. For example, the switching circuit 325 may include a ground port connected to the ground portion 366. The first switch 939a may connect the capacitor 901 to the ground portion 366, or may operate in the open state. The second switch 939b may connect the inductor 902 to the ground portion 366, or may operate in the open state. The third switch 939c may connect the inductor 575 to the ground portion 366, or may operate in the open state. The fourth switch 939d may connect the inductor 576 to the ground portion 366, or may operate in the open state.

According to an embodiment, the first switch 939a for the inductor 951 may be opened. In the open state of the first switch 939a, parasitic capacitance may occur between the inductor 951 and the ground portion 366. In the open state of the first switch 939a, the switching circuit 325 may be connected to the inductor 951 in series and may operate as a capacitor having the parasitic capacitance. The inductor 951 and the switching circuit 325 disposed in parallel in the path between the second wireless communication circuitry 302 and the second conductive portion 332 may function as a filter (e.g., a band stop filter) suppress a passage of a signal of a specific frequency band. The filter may operate in parallel with a filter according to the open state of the inductor 902 and the second switch 939b, a filter according to the open state of the inductor 575 and the third switch 939c, and a filter according to the open state of the inductor 576 and the fourth switch 939d.

According to an embodiment, the switching circuit 325 may be connected to four inductors (e.g., the inductor 951, the inductor 902, the inductor 575, or the inductor 576) through four switches (e.g., the first switch 939a, the second switch 939b, the third switch 939c, or the fourth switch 939d). As at least one switch of the switching circuit 325 is opened, at least one notch filter function according to the at least one switch may be enabled. The at least one of the four switches of the switching circuit 325 being opened may be understood that at least one of the four notch filters is enabled. For example, four or more notch filters may correspond to one band stop filter. According to an embodiment, the electronic device 101 may provide up to 15 different notch filter characteristics by controlling a state (e.g., an open state or a short-circuited state) of each of the four switches.

According to an embodiment, a characteristic of the filter may be changed according to an inductance value of the four inductors (e.g., the inductor 951, the inductor 902, the inductor 575, or the inductor 576). For example, parasitic capacitance occurring in the switch may be about 2.66 pF. In a case that an inductance value of an inductor connected to the switch is about 8.2 nH, the inductor may operate as a notch filter for blocking a signal of a frequency band of about 2.6 GHz based on the open state of the switch. Additionally, for example, the parasitic capacitance occurring in the switch may be about 2.66 pF. In a case that an inductance value of the inductor connected to the switch is about 5.6 nH, the inductor may operate as a notch filter for blocking a signal of a frequency band of about 3.2 GHz based on the open state of the switch.

According to an embodiment, the electronic device 101 may identify a frequency band for blocking and identify a switch combination corresponding to the frequency band. The switch combination may include one or a combination of two or more of the four switches (e.g., the first switch 939a, the second switch 939b, the third switch 939c, or the fourth switch 939d). The electronic device 101 may control the switching circuit 325 to open one or more switches corresponding to the switch combination. The electronic device 101 may provide a filter characteristic for blocking a signal of the frequency band based on the one or more switches being opened. An inductance of an inductor corresponding to each switch of the one or more switches and parasitic capacitance in a corresponding switch may be determined based on the frequency band.

Referring to FIG. 9E, the electronic device 101 may include the first wireless communication circuitry 301 and the second wireless communication circuitry 302. The electronic device 101 may include the first feeding portion 311 and the second feeding portion 312.

According to an embodiment, the electronic device 101 may include the inductor 511, the capacitor 512, the inductor 513, the inductor 514, the inductor 515, and/or the switching circuit 521. In an embodiment, the switching circuit 521 may include a plurality of switches and capacitors. The inductor 511, the capacitor 512, the inductor 513, the inductor 514, the inductor 515, and/or the switching circuit 521 may operate as matching circuitry for the first conductive portion 331. For example, the inductor 511, the capacitor 512, the inductor 513, the inductor 514, the inductor 515, and/or the switching circuit 521 may be understood as an exemplary structure of the first matching circuitry 321 of FIG. 3 or 4.

According to an embodiment, the electronic device 101 may include the inductor 571, the capacitor 572, the inductor 951, the inductor 902, the inductor 574, an inductor 976, an inductor 977, and/or the switching circuit 325. The switching circuit 325 may include a plurality of switches. For example, the switching circuit 325 may include impedance tuning circuitry 999, unlike FIGS. 9A, 9B, 9C, and 9D. The plurality of switches may include a first switch 949a connected to the inductor 951, a second switch 949b connected to the inductor 902, a third switch 949c connected to the inductor 976, and/or a fourth switch 949d connected to the inductor 977. For example, the switching circuit 325 may include a plurality of ports (e.g., four) connected to a passive element. The four ports of the switching circuit 325 may include a first port 947a connected to the first switch 949a, a second port 947b connected to the second switch 949b, a third port 947c connected to the third switch 949c, and/or a fourth port 947d connected to the fourth switch 949d. For example, the switching circuit 325 may include a ground port connected to the ground portion 366. The first switch 949a may electrically connect the inductor 951 to the impedance tuning circuitry 999, or may operate in the open state. The second switch may electrically connect the inductor 902 to the impedance tuning circuitry 999, or may operate in the open state. The third switch may electrically connect the inductor 976 to the impedance tuning circuitry 999, or may operate in the open state. The fourth switch may electrically connect the inductor 977 to the impedance tuning circuitry 999, or may operate in the open state.

According to an embodiment, the inductor 976 may be connected in parallel to the path between the second wireless communication circuitry 302 and the second conductive portion 332. An end portion of the inductor 976 may be connected to the third switch 949c, and another end portion of the inductor 976 may be electrically connected to the path along a line 970. The inductor 976 connected to the switching circuit 325 may not be connected to the impedance tuning circuitry 999. For example, the third switch 949c may be opened. In the open state of the third switch 979c, parasitic capacitance may occur in a connection portion between the inductor 976 and the impedance tuning circuitry 999. In the open state of the third switch 949c, the switching circuit 325 may be connected to the inductor 976 in series and may operate as a capacitor having the parasitic capacitance. The inductor 976 and the switching circuit 325 connected in parallel to the path between the second wireless communication circuitry 302 and the second conductive portion 332 may function as a filter (e.g., a band stop filter) to suppress a passage of a signal of a specific frequency band. In an embodiment, as illustrated in FIG. 9C, three band stop filters may operate independently.

In embodiments, an electronic device 101 is provided. The electronic device 101 may comprise a processor 120, a metal frame 210 including a first conductive portion 331 and a second conductive portion 332, first wireless communication circuitry 301 configured to provide a first signal of a first frequency band to the first conductive portion, second wireless communication circuitry 302 configured to provide a second signal of a second frequency band to the second conductive portion, a passive element 340, 902, 575, 576, or 951 electrically connected in a path between the second conductive portion 332 and the second wireless communication circuitry 302, and a switching circuit 325 connected to the passive element 340, 902, 575, 576, or 951. The processor 120 may be configured to control the first wireless communication circuitry 301 to transmit the first signal through the first conductive portion 331. The processor 120 may be configured to control the switching circuit 325 to operate in an open state where a first switch connected to the passive element 340, 902, 575, 576, or 951 is open while the first signal is transmitted. The passive element 340, 902, 575, 576, or 951 and the switching circuit 325 in the open state may be configured to suppress to passage of at least a portion of the first signal introduced into the second conductive portion 332.

For example, the passive element 340, 902, 575, 576, or 951 may include an inductor. The switching circuit 325 in the open state may be configured to provide at least one parasitic capacitance.

For example, the at least one parasitic capacitance and an inductance of the inductor may depend on a frequency band of at least a portion of the first signal.

For example, the processor 120 may be further configured to control the switching circuit 325 to operate in a short-circuited state where the switching circuit 325 is connected to the passive element 340, 902, 575, 576, or 951 while the second signal is transmitted.

For example, the electronic device 101 may comprise first matching circuitry 321 electrically connected to the first conductive portion 331 and the first wireless communication circuitry 301. The electronic device 101 may comprise second matching circuitry 322 electrically connected to the second conductive portion 332 and the second wireless communication circuitry 302.

For example, the electronic device 101 may further comprise another passive element electrically connected in the path between the second conductive portion 332 and the second wireless communication circuitry 302 and disposed in parallel with the passive element 340, 902, 575, 576, or 951. The switching circuit 325 may include the first switch for connecting the passive element 340, 902, 575, 576, or 951 to a ground portion and a second switch for connecting the other passive element to the ground portion. In the open state, the first switch may not be connected to the passive element 340, 902, 575, 576, or 951 and the second switch may not be connected to the other passive element.

For example, the passive element 340, 902, 575, 576, or 951 may include an inductor. The other passive element may include a capacitor.

For example, the passive element 340, 902, 575, 576, or 951 may include a first inductor. The other passive element may include a second inductor.

For example, the passive element 340, 902, 575, 576, or 951 may be shorted or opened to a ground portion based on the switching circuit 325.

For example, the switching circuit 325 may include a plurality of switches for a plurality of passive elements 340, 902, 575, 576, and 951. The plurality of switches may be configured to select one of a short-circuited state or an open state for each passive element.

For example, the plurality of passive elements 340, 902, 575, 576, and 951 may include the passive element, a second passive element, a third passive element, and a fourth passive element. The plurality of switches may include the first switch, a second switch for the second passive element, a third switch for the third passive element, and a fourth switch for the fourth passive element.

For example, the passive element and the second passive element may be electrically connected in the path between the second conductive portion 332 and the second wireless communication circuitry 302. The third passive element and the fourth passive element may be electrically connected to the second conductive portion 332.

For example, the passive element, the second passive element, and the third passive element may be electrically connected in the path between the second conductive portion 332 and the second wireless communication circuitry 302. The fourth passive element may be electrically connected to the second conductive portion 332.

For example, the passive element, the second passive element, the third passive element, and the fourth passive element may be electrically connected in the path between the second conductive portion 332 and the second wireless communication circuitry 302.

For example, the first conductive portion 331 may be disposed between a first non-conductive portion and a second non-conductive portion. The second conductive portion 332 may be disposed between the second non-conductive portion and a third non-conductive portion.

In embodiments, an electronic device 101 is provided. The electronic device 101 may comprise a processor 120, a metal frame 210 including a first conductive portion 331 and a second conductive portion 332, first wireless communication circuitry 301 configured to provide a signal to the first conductive portion 331, second wireless communication circuitry 302 configured to provide a signal to the second conductive portion 332, a passive element 340, 902, 575, 576, or 951 electrically connected in a path between the second conductive portion 332 and the second wireless communication circuitry 302, a switching circuit 325 connected to the passive element 340, 902, 575, 576, or 951. The first wireless communication circuitry 301 may be configured to transmit a first signal of a first frequency band through the first conductive portion 331 in an open state where a first switch connected to the passive element 340, 902, 575, 576, or 951 is open. The first wireless communication circuitry 301 may be configured to transmit a second signal of the first frequency band through the first conductive portion 331 in a short-circuited state where the first switch connected to the passive element 340, 902, 575, 576, or 951 is closed. A radiation gain of the first signal may be higher than a radiation gain of the second signal.

For example, the passive element 340, 902, 575, 576, or 951 may include an inductor. The switching circuit 325 in the open state may be configured to provide at least one parasitic capacitance.

For example, the passive elements 340, 902, 575, 576, or 951 may be configured to, based on the switching circuit 325 in the open state, to suppress to passage of at least a portion of the first signal corresponding to a predetermined frequency band. The at least one parasitic capacitance and an inductance of the inductor may depend on the predetermined frequency band.

For example, the electronic device 101 may further comprise another passive element electrically connected in the path between the second conductive portion 332 and the second wireless communication circuitry 302 and disposed in parallel with the passive element 340, 902, 575, 576, or 951. The switching circuit 325 may include the first switch for connecting the passive element 340, 902, 575, 576, or 951 to a ground portion and a second switch for connecting the other passive element to the ground portion. In the open state, the first switch may not be connected to the passive element 340, 902, 575, 576, or 951 and the second switch may not be connected to the other passive element.

For example, the passive element 340, 902, 575, 576, or 951 may be shorted or opened to a ground portion based on the switching circuit 325.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device (101), comprising:
a processor (120);
a metal frame (210) including a first conductive portion (331) and a second conductive portion (332);
first wireless communication circuitry (301) configured to provide a first signal of a first frequency band to the first conductive portion (331);
second wireless communication circuitry (302) configured to provide a second signal of a second frequency band to the second conductive portion (332);
a passive element (340, 902, 575, 576, 951) electrically connected in a path between the second conductive portion (332) and the second wireless communication circuitry (302); and
a switching circuit (325) connected to the passive element (340, 902, 575, 576, 951),
wherein the processor (120) is configured to:
control the first wireless communication circuitry (301) to transmit the first signal through the first conductive portion (331),
control the switching circuit (325) to operate in an open state where a first switch connected to the passive element (340, 902, 575, 576, 951) is open while the first signal is transmitted, and
wherein the passive element (340, 902, 575, 576, 951) and the switching circuit (325) in the open state are configured to suppress a passage of at least a portion of the first signal introduced into the second conductive portion (332).

2. The electronic device (101) of claim 1,
wherein the passive element (340, 902, 575, 576, 951) includes an inductor, and
wherein the switching circuit (325) in the open state is configured to provide at least one parasitic capacitance.

3. The electronic device (101) of claims 1 to 2,
wherein the at least one parasitic capacitance and an inductance of the inductor depend on a frequency band of at least a portion of the first signal.

4. The electronic device (101) of claims 1 to 3, wherein the processor (120) is further configured to:
control the switching circuit (325) to operate in a short-circuited state where the switching circuit (325) is connected to the passive element (340, 902, 575, 576, 951) while the second signal is transmitted.

5. The electronic device (101) of claims 1 to 4, further comprising:
first matching circuitry (321) electrically connected to the first conductive portion (331) and the first wireless communication circuitry (301); and
second matching circuitry (322) electrically connected to the second conductive portion (332) and the second wireless communication circuitry (302).

6. The electronic device (101) of claims 1 to 5, further comprising:
another passive element electrically connected in the path between the second conductive portion (332) and the second wireless communication circuitry (302) and disposed in parallel with the passive element (340, 902, 575, 576, 951),
wherein the switching circuit (325) includes the first switch for connecting the passive element (340, 902, 575, 576, 951) to a ground portion and a second switch for connecting the other passive element to the ground portion, and
wherein, in the open state, the first switch is not connected to the passive element (340, 902, 575, 576, 951) and the second switch is not connected to the other passive element.

7. The electronic device (101) of claims 1 to 6,
wherein the passive element (340, 902, 575, 576, 951) includes an inductor, and
wherein the other passive element includes a capacitor.

8. The electronic device (101) of claims 1 to 6,
wherein the passive element (340, 902, 575, 576, 951) includes a first inductor, and
wherein the other passive element includes a second inductor.

9. The electronic device (101) of claims 1 to 8,
wherein the passive element (340, 902, 575, 576, 951) is shorted or opened to a ground portion based on the switching circuit (325).

10. The electronic device (101) of claims 1 to 9,
wherein the switching circuit (325) includes a plurality of switches for a plurality of passive elements (340, 902, 575, 576, 951), and
wherein the plurality of switches are configured to select one of a short-circuited state or an open state for each passive element.

11. The electronic device (101) of claims 1 to 10,
wherein the plurality of passive elements (340, 902, 575, 576, 951) include the passive element, a second passive element, a third passive element, and a fourth passive element, and
wherein the plurality of switches include the first switch, a second switch for the second passive element, a third switch for the third passive element, and a fourth switch for the fourth passive element.

12. The electronic device (101) of claims 1 to 11,
wherein the passive element and the second passive element are electrically connected in the path between the second conductive portion (332) and the second wireless communication circuitry (302), and
wherein the third passive element and the fourth passive element are electrically connected to the second conductive portion (332).

13. The electronic device (101) of claims 1 to 11,
wherein the passive element, the second passive element, and the third passive element are electrically connected in the path between the second conductive portion (332) and the second wireless communication circuitry (302), and
wherein the fourth passive element is electrically connected to the second conductive portion (332).

14. The electronic device (101) of claims 1 to 11,
wherein the passive element, the second passive element, the third passive element, and the fourth passive element are electrically connected in the path between the second conductive portion (332) and the second wireless communication circuitry (302).

15. An electronic device (101) comprising:
a processor (120);
a metal frame (210) including a first conductive portion (331) and a second conductive portion (332);
first wireless communication circuitry (301) configured to provide a signal to the first conductive portion (331);
second wireless communication circuitry (302) configured to provide a signal to the second conductive portion (332);
a passive element (340, 902, 575, 576, 951) electrically connected in a path between the second conductive portion (332) and the second wireless communication circuitry (302);
a switching circuit (325) connected to the passive element (340, 902, 575, 576, 951),
wherein the first wireless communication circuitry (301) transmits a first signal of a first frequency band through the first conductive portion (331) in an open state where a first switch connected to the passive element (340, 902, 575, 576, 951) is open,
wherein the first wireless communication circuitry (301) transmits a second signal of the first frequency band through the first conductive portion (331) in a short-circuited state where the first switch connected to the passive element (340, 902, 575, 576, 951) is closed, and
wherein a radiation gain of the first signal is higher than a radiation gain of the second signal.
